# EUROPÄISCHE PATENTSCHRIFT

(11) **EP 0 707 993 B1**
(45) Veröffentlichungstag und Bekanntmachung des Hinweises auf die Patenterteilung: **24.07.1996**
(21) Anmeldenummer: 94118791.6
(22) Anmeldetag: 29.11.1994
(51) Int. Cl.: B60J 1/00

(54) **Vorrichtung zum Einfassen der Ränder der Fensterscheiben von Kraftfahrzeugen**
Method for bordering the edge of motorvehicle windows
Procédé pour l'encadrement du bord des fenêtres de véhicules

(43) Veröffentlichungstag der Anmeldung: 24.04.1996
(73) Patentinhaber: HENNIGES ELASTOMER- UND KUNSTSTOFFTECHNIK GMBH & CO KG, D-31547 Rehburg-Loccum (DE)
(72) Erfinder: Kreye, Bernhard, 31515 Wunstorf (DE)
(74) Vertreter: Wehser, Wulf, Dipl.-Ing.

(56) Entgegenhaltungen:
- EP-A- 0 121 481
- DE-A- 3 447 271
- DE-A- 3 536 806

## Beschreibung

Die Erfindung betrifft eine Vorrichtung zum Einfassen der Ränder der Fensterscheiben von Kraftfahrzeugen mit einem aus einem elastischen Material bestehenden Rahmen, wobei als Rahmengrundlage eine aus einem biegsamen, duktilen Metall oder aus einem thermoplastischen Kunststoff bestehendes Winkelband Verwendung findet, welches im Querschnitt einen die Außenkante der Scheibe überragenden und gegen die Scheibe gerichteten Schenkel aufweist, der einen nach außen offenen umlaufenden Kanal zur Aufnahme von Verbindungselementen bildet, der von einem der Scheibenfläche zugewandten Innenraum getrennt ist, wobei der Innenraum mit Durchbrüchen zur Einfüllung eines Klebers oder eines klebfähigen Kunststoffes versehen ist, so daß der durch die Durchbrüche in Richtung auf die Scheibenfläche durchtretende Kleber diese im Abstand zu der Durchbruchsebene des Winkelbandes gegenüber der Scheibe fixiert.

Bei einer bekannten Vorrichtung dieser Art, z.B. DE-A-3 447 271, ist zwar ein umlaufender Kanal vorgesehen, der der Aufnahme eines Klebers oder klebfähigen Kunststoffes dient, jedoch mußte bei der bekannten Anordnung die Stirnfläche der Scheibe kleberfrei bleiben, weil die Kanalbildung durch das Winkelband eine Beaufschlagung der Stirnfläche mit einem Kleber oder klebfähigen Kunststoff nicht zuließ.

Dieser Verzicht auf die Festlegung der zur Karosserie gewandten Stirnseite der Scheibe hat aber zum Teil erhebliche Nachteile, die darin bestehen, daß ein größerer Abstand zu der Scheibenstirnfläche und dem zugeordneten Trägerflansch erforderlich ist, was zu geringerer Haltbarkeit führt.

Der Erfindung liegt demgemäß die Aufgabe zugrunde, eine Anordnung der eingangs genannten Art so auszubilden, daß diese Nachteile vermieden werden und daß die Festlegung der Scheibe sicher erfolgt.

Diese Aufgabe wird erfindungsgemäß dadurch gelöst, daß die Durchbrüche so ausgebildet und angeordnet sind, daß sie mit einem Kanal in Verbindung stehen, der den Kleber auf die Stirnfläche der Scheibe auflaufen läßt.

Weitere Vorteile der Ausführungen der erfindungsgemäßen Anordnung ergeben sich aus den Unteransprüchen und der nachfolgenden Figurenbeschreibung.
- Fig. 1: zeigt in Seitenansicht im Schnitt ein Ausführungsbeispiel der erfindungsgemäßen Anordnung. bei welchem das Winkelband aus Metall besteht.
- Fig. 2: ist eine Darstellung ähnlich Fig. 1, bei welcher das Winkelband aus Kunststoff besteht.
- Fig. 3: zeigt in perspektivischer Darstellung einen Abschnitt des Winkelbandes.
- Fig. 4: zeigt in perspektivitischer Darstellung die Einzelteile der Ausführungsform nach Fig. 3.
- Fig. 5: zeigt in zusammengesetzten Zustand eine weitere Ausführungsform der erfindungsgemäßen Anordnung.

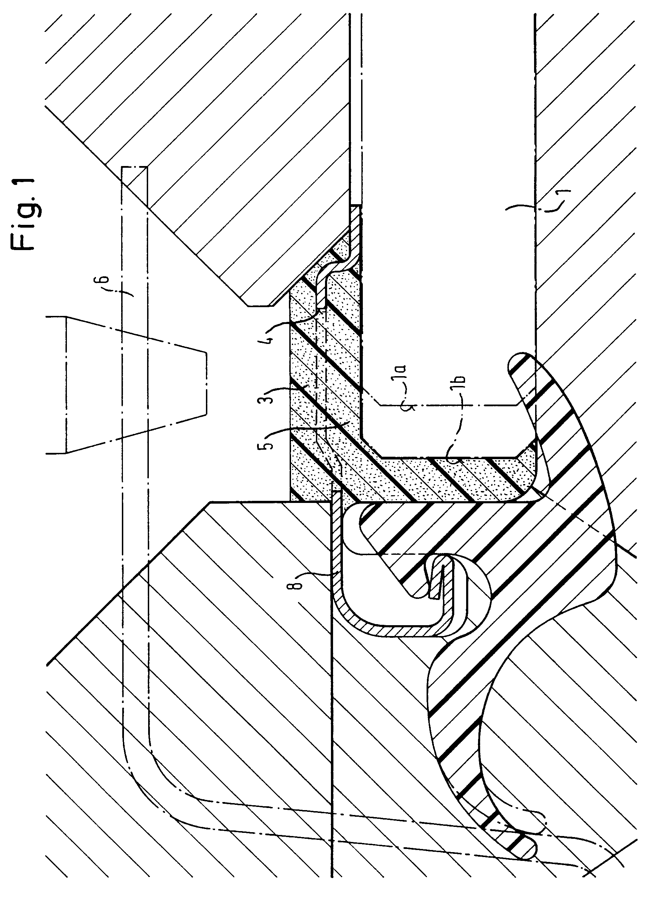

Fig. 1 ist eine Kraftfahrzeugfensterscheibe 1, deren Stirnfläche 1a sich in einem Toleranzbereich gegenüber einem stirnseitigen Kleber 3 bewegen kann, wobei die zweite Endlage der Scheibe 1 gegenüber dem Kleber mit 1b bezeichnet ist. Der Kleber 3 in der Ausführungsform als Vergußmasse steht über Durchbrüche 4 mit einem Kanal 5 in Verbindung, welcher zwischen der Außenfläche der Scheibe 1 und dem der Halterung der Scheibe dienenden Karosserieflansch 6, der durch eine strichpunktierte Linie der Figur wiedergegeben ist.

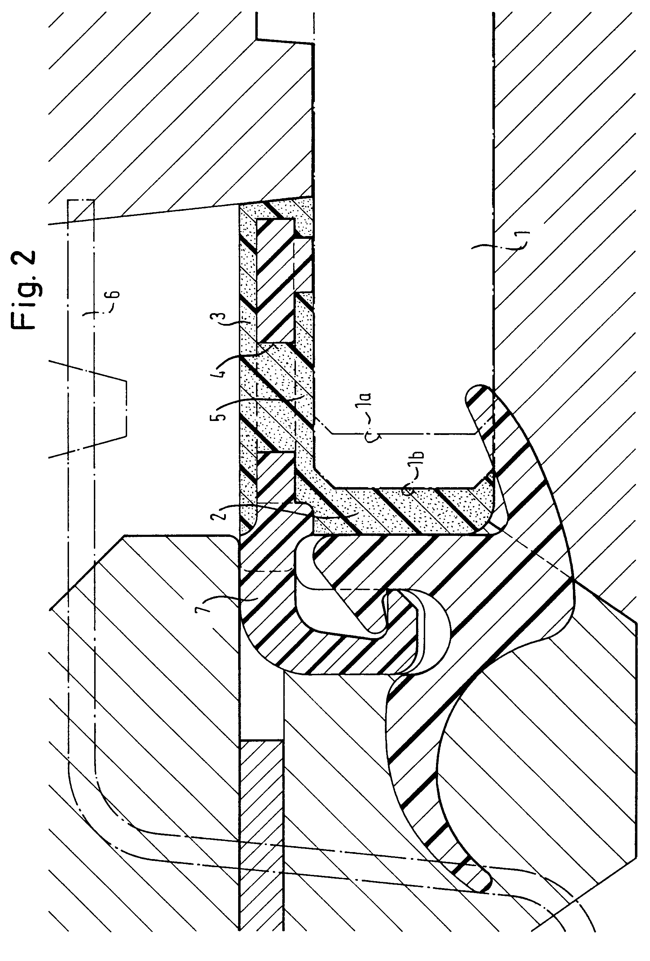

Bei der Ausführungsform nach Fig. 1 ist ein an sich bekanntes Winkelband aus Metall verwendet worden, während bei der Ausführungsform nach Fig. 2 ein Winkelband aus Kunststoff Verwendung findet. Dieses Winkelband ist mit 7 bezeichnet. Das metallene Winkelband trägt in Fig. 1 das Bezugszeichen 8.

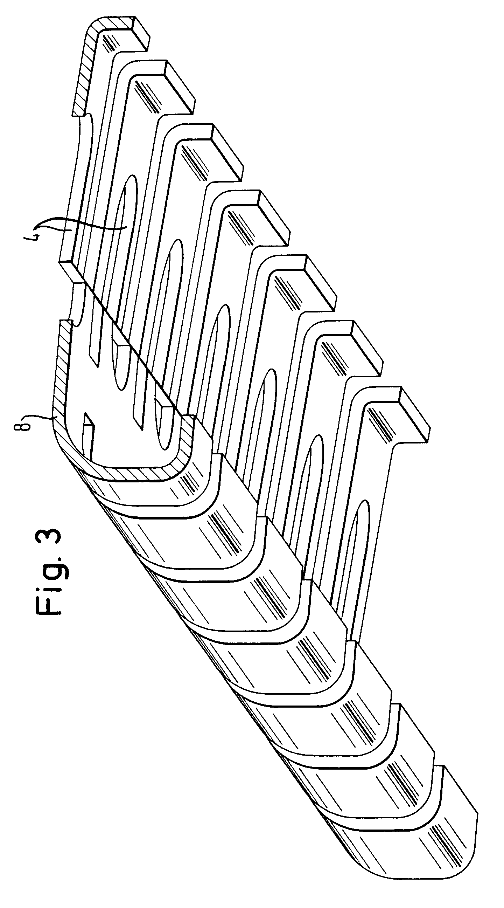

Fig. 3 zeigt in perspektivischer Darstellung eine Ausführungsform der erfindungsgemäßen Anordnung, bei welcher ein Winkelband 8 Verwendung findet, daß aus Metall besteht.

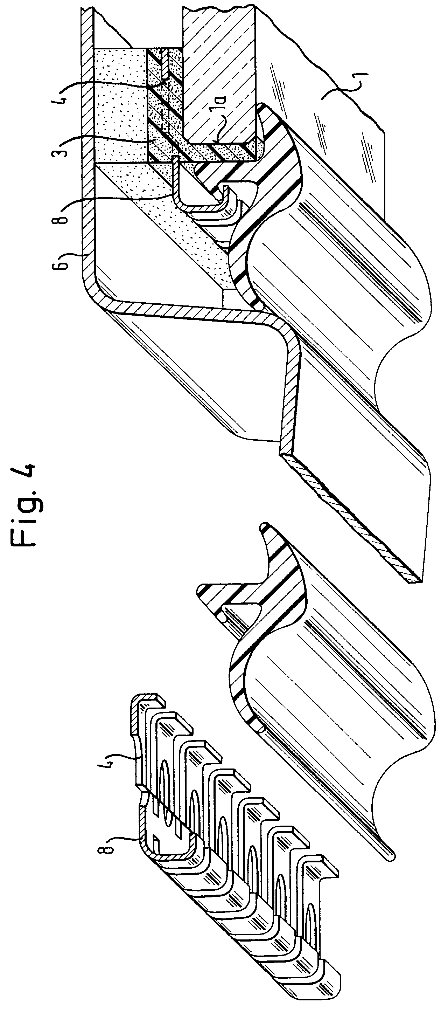

In Fig. 4 ist die Anordnung nach Fig. 3 so dargestellt, daß die Einzelteile perspektivisch erkennbar sind. Wie aus Fig. 3 hervorgeht, wird die Fensterscheibe unter anderem durch eine elastisch einbringbare Klemmleiste gehaltert, die die übrige Halterung ergänzt.

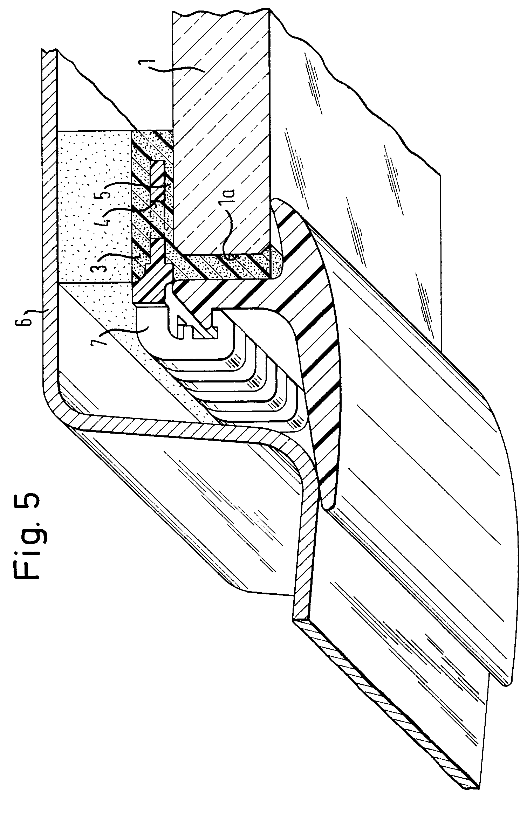

In der auseinandergezogenen perspektivischen Darstellung nach Fig. 4 sind die einzelnen Leisten so dargestellt, daß sie nicht miteinander in Eingriff stehen. Das Winkelband besteht bei dieser Ausführungsform aus Metall, während es bei der ansonsten gleichen Fig. 5 aus Kunststoff besteht. Letzterer führt dazu, daß die Außenabstände größer sind, so daß im ganzen die Halterung breiter und kompakter wird als bei der Verwendung eines aus Metall bestehenden Winkelbandes.

## Patentansprüche

1. Vorrichtung zum Einfassen der Ränder der Fensterscheiben (1) von Kraftfahrzeugen mit einem aus einem elastischen Material bestehenden Rahmen, wobei als Rahmengrundlage eine aus einem biegsamen, duktilen Metall oder aus einem thermoplastischen Kunststoff bestehendes Winkelband (7, 8) Verwendung findet, welches im Querschnitt einen die Außenkante der Scheibe (1) überragenden und gegen die Scheibe (1) gerichteten Schenkel aufweist, der einen nach außen offenen umlaufenden Kanal (5) zur Aufnahme von Verbindungselementen bildet, der von einem der Scheibenfläche zugewandten Innenraum getrennt ist, wobei der Innenraum mit Durchbrüchen (4) zur Einfüllung eines Klebers (3) oder eines klebfähigen Kunststoffes versehen ist, so daß der durch die Durchbrüche (4) in Richtung auf die Scheibenfläche durchtretende Kleber (3) diese im Abstand zu der Durchbruchsebene des Winkelbandes gegenüber der Scheibe (1) fixiert, dadurch gekennzeichnet, daß die Durchbrüche (4) so ausgebildet und angeordnet sind, daß sie mit einem Kanal (5) in Verbindung stehen, der den Kleber (3) bzw. die Vergußmasse auf die Stirnflächen (1a) der Scheibe (1) auflaufen läßt.

2. Vorrichtung nach Anspruch 1, dadurch gekennzeichnet, daß die Durchbrüche (4) zusammen mit einem Abstand des zugehörigen Schenkels des Winkelbandes (7 oder 8) einen gemeinsamen Kanal (9) für den Eintritt des Kleberes (3) bilden.

3. Vorrichtung nach Anspruch 1 oder 2, dadruch gekennzeichnet, daß die Durchbrüche (4) auf ihren beiden Seiten jeweils mit einem Teilstück des Kanals in Verbindung stehen, welches wesentlich breiter als der Durchmesser der Durchbrüche ist.

4. Vorrichtung nach einem der vorhergehenden Ansprüche, dadurch gekennzeichnet, daß die einzelnen Vorrichtungsteile nach Aushärtung des Klebers entfernbar sind.

## Claims

1. Device for enclosing the borders of the windows (1) of motor vehicles, having a frame consisting of an elastic material, use being made, as the basis of the frame, of an angled strip (7, 8) consisting of a flexible, ductile metal or of a thermoplastic, which angled strip (7, 8) exhibits, in cross-section, a leg which projects beyond the outer edge of the window (1), is directed towards the window (1) and forms an encircling channel (5) which is open towards the outside, is intended for receiving connecting elements and is separated from an interior which faces the window surface, the interior being provided with through-passages (4) for the introduction of an adhesive (3) or of an adhesive plastic, with the result that the adhesive (3) passing through the through-passages (4) in the direction of the window surface fixes said window surface with respect to the window [sic] (1) at a distance from the through-passage plane of the angled strip, characterized in that the through-passages (4) are designed and arranged such that they are in connection with a channel (5) which permits the adhesive (3) or the sealing compound to run onto the end surfaces (1a) of the window (1).

2. Device according to Claim 1, characterized in that the through-passages (4), together with a spacing of the associated leg of the angled strip (7 or 8), form a common channel (9) [sic] for the introduction of the adhesive (3).

3. Device according to Claim 1 or 2, characterized in that the through-passages (4) are in connection, on both sides, with a section of the channel in each case, which section is considerably wider than the diameter of the through-passages.

4. Device according to one of the preceding claims, characterized in that the individual parts of the device can be removed after the adhesive has cured.

## Revendications

1. Dispositif d'encadrement des bords des vitres de fenêtres (1) de véhicule automobile avec un cadre constitué d'un matériau élastique, dans lequel on utilise comme base du cadre une cornière (7, 8) réalisée dans un métal ductile, flexible ou dans une matière thermoplastique, qui présente en section transversale une aile dépassant du bord extérieur de la vitre (1) et orientée vers la vitre (1), qui forme un canal (5) périphérique, ouvert vers l'extérieur, destiné à loger des éléments de liaison, qui est séparé du volume intérieur, tourné vers la surface de vitre, le volume intérieur étant pourvu d'ajours (4) destinés à être remplis d'une col le (3) ou d'une matière adhésive, de sorte que la colle, traversant les ajours en direction de la surface de vitre, fixe celle-ci à distance du plan des ajours de la cornière, par rapport à la vitre, caractérisé en ce que les ajours (4) sont conformés et disposés de manière à communiquer avec un canal (5), qui laisse s'écouler la colle (3) ou la pâte de scellement sur les faces frontales (1a) de la vitre (1).

2. Dispositif selon la revendication 1, caractérisé en ce que les ajours (4) forment, avec un écartement de la branche correspondante de la cornière (7,8), un canal (9) commun pour l'entrée de la colle (3).

3. Dispositif selon la revendication 1 ou 2, caractérisé en ce que les ajours (4) communiquent sur chacun de leurs deux côtés avec un bout du canal , qui est sensiblement plus large que le diamètre des ajours.

4. Dispositif selon l'une des revendications précédentes, caractérisé en ce que les différents éléments du dispositif peuvent être en levés après durcissement de la colle.
